# EUROPÄISCHE PATENTANMELDUNG

(11) **EP 4 700 509 A1**
(43) Veröffentlichungstag der Anmeldung: **25.02.2026**
(21) Anmeldenummer: 25189219.6
(22) Anmeldetag: 14.07.2025
(51) Int. Cl.: G05B 19/404

(54) **VERFAHREN ZUM HARTFEINBEARBEITEN EINES WERKSTÜCKS MIT EINER VERZAHNUNG ODER EINEM PROFIL AUF EINER HARTFEINBEARBEITUNGSMASCHINE**

(30) Priorität: 19.08.2024 DE 102024123550
(71) Anmelder: Kapp Niles GmbH & Co. KG, 96450 Coburg (DE)
(72) Erfinder: GÖBEL, Christopher, 96482 Ahorn (DE); RITZ, Johannes, 96242 Sonnefeld (DE); SENFTLEBEN, Jan, 96450 Coburg (DE)
(74) Vertreter: Gosdin, Carstensen & Partner Patentanwälte Partnerschaftgesellschaft mbB

(57) **Zusammenfassung**

Die Erfindung betrifft ein Verfahren zum Hartfeinbearbeiten eines Werkstücks auf einer Hartfeinbearbeitungsmaschine, wobei die Hartfeinbearbeitungsmaschine eine Anzahl Maschinenachsen aufweist, wobei bei dem Verfahren das Werkstück auf einer Werkstückspindel aufgenommen und mittels eines Werkzeugs, welches auf einer Werkzeugspindel aufgenommen ist, durch Ineingriffbringen des Werkzeugs mit dem Werkstück bearbeitet wird. Um eine verbesserte Zustandsüberwachung der Hartfeinbearbeitungsmaschine zu ermöglichen, sieht die Erfindung vor, dass zumindest in einem zeitlichen Abschnitt der Bearbeitungsphase, in der sich das Werkzeug nicht in Eingriff mit dem Werkstück befindet, an mindestens einer Maschinenachse eine Prüffahrt durchgeführt wird, wobei bei der Prüffahrt die Maschinenachse angetrieben wird, wobei für mindestens einen Antriebsparameter ein Wert vorgegebenen wird, für den ein Soll-Wert der Bewegung der Maschinenachse erwartet wird, wobei der Ist-Wert der Bewegung der Maschinenachse erfasst wird, wobei von einer Überwachungseinrichtung ein Vergleich zwischen Soll-Wert und Ist-Wert vorgenommen wird und wobei von der Überwachungseinrichtung ein Signal ausgegeben wird, wenn der Vergleich zwischen Soll-Wert und Ist-Wert ergeben hat, dass die Differenz zwischen Soll-Wert und Ist-Wert außerhalb eines zulässigen Bereichs liegt.

## Beschreibung

Die Erfindung betrifft ein Verfahren zum Hartfeinbearbeiten eines Werkstücks mit einer Verzahnung oder einem Profil auf einer Hartfeinbearbeitungsmaschine, wobei die Hartfeinbearbeitungsmaschine eine Anzahl Maschinenachsen aufweist, welche für die Bearbeitung des Werkstücks NC-gesteuert betätigt werden, wobei bei dem Verfahren das Werkstück auf einer Werkstückspindel aufgenommen und mittels eines Werkzeugs, welches auf einer Werkzeugspindel aufgenommen ist, durch Ineingriffbringen des Werkzeugs mit dem Werkstück bearbeitet wird, wobei die Bearbeitungsphase des Werkstücks mit der Einbringung des Werkstücks in die Hartfeinbearbeitungsmaschine beginnt und mit der Abfuhr des bearbeiteten Werkstücks aus der Hartfeinbearbeitungsmaschine endet.

Ein gattungsgemäßes Verfahren ist aus der EP 3 168 700 A1 bekannt. Bei diesem wird in bekannter Weise ein Werkstück numerisch kontrolliert bearbeitet, indem das Werkzeug in Eingriff mit dem zu bearbeitenden, insbesondere mit dem zu schleifenden Werkstück gebracht wird. Neben der eigentlichen Bearbeitungszeit treten verschiedene Nebenzeiten auf, beispielsweise für die Be- und Entladung von Werkstücken und für das Abrichten eines Schleifwerkzeugs.

Die Hartfeinbearbeitungsmaschine unterliegt aufgrund des Betriebs dem Verschleiß, so dass zu gegebener Zeit eine Maschinenwartung durchgeführt und gegebenenfalls Maschinenkomponenten ersetzt werden müssen. Dasselbe gilt beispielsweise im Falle eines unerwarteten Ereignisses (z. B. Crash, Überlast). Dabei ist zu vermeiden, dass die Produktion von Werkstücken erfolgt, während die Maschine bereits verschleiß- bzw. schadensbedingt nicht mehr in ordnungsgemäßem Zustand ist.

Daher ist es in der Praxis üblich, zur Prüfung des Status der Maschine und insbesondere zu Beurteilung von Verschleiß periodisch Referenzfahrten der Maschine durchzuführen, bei denen die Maschinenachsen (Linearachsen/ Rotationsachsen) außerhalb des eigentlichen Betriebs der Maschine verfahren werden und die Reaktion auf vorgegebene Steuerungssignale erfasst wird. Damit kann geprüft werden, ob die beteiligten Maschinenkomponenten noch in einwandfreiem Zustand sind oder ob verschleißbedingt bereits Veränderungen in der Reaktion auf vorgegebene Steuerungssignale festgestellt werden. In letzterem Falle steht dann eine entsprechende Maschinenwartung an.

Die zyklischen durchgeführten Referenzfahrten liefern dabei ein sehr genaues Bild über den Maschinenzustand. Es entstehen genaue Resultate, da bei den Referenzfahrten exakte Verfahrbewegungen mit ähnlichen Rahmenbedingungen gefahren werden können und somit störende Einflussgrößen nur sehr geringe Auswirkungen auf das System haben.

Nachteilig ist dabei allerdings, dass es von der gewählten Periode abhängt, in der besagte Referenzfahrten durchgeführt werden, wie zeitlich engmaschig Veränderungen an der Maschine ermittelt werden können. In der Praxis ist man bestrebt, Referenzfahrten aufgrund der hierfür benötigten Zeiten nicht zu häufig durchzuführen (da während derselben keine Bearbeitung von Werkstücken stattfinden kann), was dann allerdings zu relativ langen Phasen führt, in denen die Maschine nicht geprüft wird (lange Zeiträume zwischen den Referenzfahrten). Länger andauernde Referenzfahrten können darüber hinaus gegebenenfalls zu Problemen im Temperaturgang der Maschine führen.

Der Erfindung liegt die **Aufgabe** zugrunde, ein Verfahren der eingangs genannten Art so fortzubilden, dass eine verbesserte Zustandsüberwachung der Hartfeinbearbeitungsmaschine und namentlich deren Maschinenkomponenten, insbesondere der Linear- und Rotationsachsen, möglich ist. Dabei soll ohne Verlust an Maschinenkapazität eine möglichst engmaschige Maschinenüberwachung möglich sein. Des Weiteren wird angestrebt, mögliche Fehlerursachen für den Verschleiß genauer zu detektieren.

Die **Lösung** dieser Aufgabe durch die Erfindung ist dadurch gekennzeichnet, dass zumindest in einem zeitlichen Abschnitt der Bearbeitungsphase, in der sich das Werkzeug nicht in Eingriff mit dem Werkstück befindet, an mindestens einer Maschinenachse eine Prüffahrt durchgeführt wird, wobei bei der Prüffahrt die Maschinenachse angetrieben wird, wobei für mindestens einen Antriebsparameter ein Wert vorgegebenen wird, für den ein Soll-Wert der Bewegung der Maschinenachse erwartet wird, wobei der Ist-Wert der Bewegung der Maschinenachse erfasst wird, wobei von einer Überwachungseinrichtung ein Vergleich zwischen Soll-Wert und Ist-Wert vorgenommen wird und wobei von der Überwachungseinrichtung ein Signal ausgegeben wird, wenn
a) der Vergleich zwischen Soll-Wert und Ist-Wert ergeben hat, dass die Differenz zwischen Soll-Wert und Ist-Wert außerhalb eines zulässigen Bereichs liegt oder
b) der Vergleich zwischen Soll-Wert und Ist-Wert ergeben hat, dass die Differenz zwischen Soll-Wert und Ist-Wert einen Wert aufweist, der im Vergleich zu früher erfassten Werten der Differenz auf das Verlassen eines zulässigen Toleranzbandes hindeutet.

Insofern wird also während besagter Prüffahrt ein Betriebsparameter für mindestens eine Maschinenachse vorgegeben und die Reaktion derselben auf den Betriebsparameter erfasst; ein Signal wird ausgegeben, wenn eine Abweichung zwischen einem erwarteten Wert (Soll-Wert) und dem gemessenen Wert (Ist-Wert) einen zulässigen Bereichs verlässt (Fall a). Genauso kann allerdings auch eine Trendanalyse erfolgen, bei der bei früheren Prüffahrten erfasste Werte mit einbezogen werden, um zu erkennen, ob die Maschinenachse im Begriff ist, einen zulässigen Betriebsbereich zu verlassen (Fall b).

Der mindestens eine zeitliche Abschnitt der Bearbeitungsphase liegt bevorzugt innerhalb des Zeitintervalls, in der das Werkstück auf der Werkstückspindel aufgenommen ist. Allerdings können hier auch andere Zeitabschnitte des Bearbeitungszyklus ins Auge gefasst werden, beispielsweise Zeitabschnitte, in denen gewuchtet oder abgerichtet wird.

Zur hier angewendeten Nomenklatur sei angemerkt, dass unter einer (insbesondere oben bereits erwähnten) "Prüffahrt" die beschriebene Überwachung einer Maschinenachse während des regulären Bearbeitungsprozesses eines Werkstücks zu verstehen ist - wenngleich dies nur für Teilprozesse der Bearbeitung erfolgt, in denen das Werkzeug nicht ins Werkstück eingreift -, während eine "Referenzfahrt" ein separater Prüflauf der (kompletten) Maschinenachsen ist, der außerhalb des Bearbeitungsprozesses eines Werkstücks durchgeführt wird.

Die Prüffahrt findet bevorzugt während eines Leerhubs statt, in der das Werkzeug relativ zum Werkstück verfahren wird, ohne dass es zum Eingriff des Werkzeugs in das Werkstück kommt. Die Prüffahrt kann gemäß einer anderen bevorzugten Möglichkeit auch während eines Beschleunigungs- oder Drehbeschleunigungs-Vorgangs und/oder während eines Bremsvorgangs einer Maschinenachse stattfinden. Möglich sind natürlich auch andere Abschnitte des Bearbeitungszyklus, z. B. das Drehen eines Rundtisches oder das Abrichten.

Die Prüffahrt erfolgt insbesondere bevorzugt während einer Abrichtphase, in der das Werkzeug profiliert wird, und/oder während einer Phase, in der das Werkstück zur Bearbeitung in der Hartfeinbearbeitungsmaschine ausgerichtet wird, und/oder während einer Phase, in der ein Wuchtvorgang durchgeführt wird, und/oder in einer Phase, in der ein Be- oder Entladevorgang durchgeführt wird.

Eine Fortbildung sieht vor, dass die Ausgabe des Signals erst erfolgt, wenn eine statistische Auswertung und/oder eine andere Bewertung einer Anzahl von erfassten Werten durchgeführt wurde. Damit soll verhindert werden, dass bereits ein Signal bei einem "Ausreißer" während der Prüffahrt ausgegeben wird. Unter der genannten statistischen Auswertung ist generell eine (weiterführende) Analyse der erfassten Daten zu verstehen, welche Trends aufzeigt, welche sich bei den erfassten Daten abzeichnen.

Das vorgeschlagene Verfahren ist besonders vorteilhaft umsetzbar, wenn Künstliche Intelligenz (KI) eingesetzt wird. Insbesondere kann in diesem Zusammenhang die Beurteilung der erfassten Werte mittels eines Algorithmus erfolgen, der Rückkopplungen (bzw. Erfahrungswerte) im Rahmen des "Machine Learnings" (ML) berücksichtigt.

Der erfasste Wert ist bevorzugt die Beschleunigung, die ein Beschleunigungsaufnehmer erfasst, und/oder der Strom, mit dem eine Maschinenachse angetrieben wird, und/oder eine Regeldifferenz, die bei der Regelung der Maschinenachse auftritt, und/oder ein Signal ist, welches einen Rückschluss auf eine Abweichung zwischen Soll-Wert und Ist-Wert liefert.

Im Falle der Beschleunigungsmessung kann bei entsprechend niedrigen Werten bzw. im Falle dessen, dass ein Signal von errechneten oder bekannten Verläufen im Zeit- und/oder Frequenzbereich abweicht, auf einen beginnenden schadhaften Verlauf des Betriebs geschlossen werden. Wird der Strom, mit dem eine Maschinenachse angetrieben wird, bei Vorgabe einer Soll-Bewegung (im Zeit- und/oder im Frequenzbereich) auffallend hoch, kann hieraus gleichermaßen auf erhöhten Verschleiß geschlossen werden. Dies gilt schließlich auch im Falle der Regeldifferenz, welche der Regler ausgleichen muss; treten hier erhöhte Werte der Regeldifferenz (im Zeit- und/oder im Frequenzbereich) auf, lässt sich insofern auch darauf rückschließen, dass es verschleißbedingt dem Regler schwerer fällt, die vorgegebene Position einzuhalten. Insoweit ist anzumerken, dass die ausgewerteten und überwachten Signale sowohl im Zeit- als auch im Frequenzbereich betrachtet werden können.

Die Ausgabe des Signals der Überwachungseinrichtung kann im Falle dessen, dass die Beurteilung ergeben hat, dass der Wert außerhalb eines zulässigen Bereichs liegt, die Durchführung einer Referenzfahrt der Hartfeinbearbeitungsmaschine veranlassen, bei der die Betätigung aller Maschinenachse erfolgt, ohne dass es zu einem Eingriff des Werkzeugs in das Werkstück kommt. Demgemäß löst das Signal eine Referenzfahrt für die Maschine aus, wenn Auffälligkeiten bei einer oder mehreren Prüffahrten festgestellt wurden.

Das vorgeschlagene Verfahren kommt bevorzugt beim Verzahnungsschleifen zum Einsatz.

Gemäß dem vorgeschlagenen Konzept kann erreicht werden, dass der Zustand der Maschine und insbesondere der Maschinenkomponenten bereits während eines Bearbeitungszyklus eines Werkstücks erfasst und damit eine engmaschige und zeitneutrale Überwachung installiert werden kann. Die zeitaufwändigen und daher nur stichpunktartig durchgeführten Referenzfahrten müssen nicht mehr nur zyklisch gefahren werden, sondern können bedarfsbedingt durchgeführt werden.

Die Überwachungsqualität steigt durch die zeitliche Engmaschigkeit und die Nebenzeiten können vorteilhaft reduziert werden. Das hat zur Folge, dass die Anzahl der nicht ordnungsgemäß bearbeiteten Werkstücke (bedingt durch verschlissene oder fehlerhafte Maschinenkomponenten) reduziert werden kann. Ferner wird die Fehlerursachenanalyse wesentlich erleichtert und bietet gute Voraussetzungen für eine vorsorgliche Maschinenwartung ("Predictive Maintenance"-Konzept).

Ein weiterer Vorteil ist, dass Ursachen insbesondere für plötzlich auftretenden Verschleiß wesentlich leichter ermittelt und deutlich genauer zugeordnet werden können.

Vorteilhaft ist ferner, dass die Verfügbarkeit der Maschine für die effektive Bearbeitung des Werkstücks erhöht werden kann, da ohnehin verfügbare Nebenzeiten für Prüffahrten genutzt werden und somit bei der beschriebenen Vorgehensweise ungeplante Maschinenstillstände reduziert oder vermieden werden können.

Vorteilhaft ist schließlich, dass kritische Temperaturgänge der Maschine vermieden werden können.

In der Zeichnung sind Ausführungsbeispiele der Erfindung dargestellt.
- Fig. 1: zeigt schematisch den Verschleißverlauf einer Komponente einer Verzahnungsschleifmaschine, wobei ein Verschleißindex über der Zeit aufgetragen ist,
- Fig. 2: zeigt schematisch den Verschleißverlauf einer Komponente der Maschine, wobei ein Verschleißindex über einer Anzahl von Messungen aufgetragen ist,
- Fig. 3: zeigt schematisch ein Ablaufdiagramm, wie Kriterien für die Durchführung einer Referenzfahrt der Maschine festgelegt werden,
- Fig. 4: zeigt schematisch das Konzept für den Datenaustausch, der gemäß einem Ausführungsbeispiel für das vorgeschlagene Verfahren vorgesehen ist,
- Fig. 5: zeigt schematisch für drei Maschinenachsen deren Verlauf über der Zeit, wobei mit Rechtecken Bereiche markiert sind, in denen Prüffahrten vorgesehen sind, und
- Fig. 6: zeigt schematisch ein Ablaufdiagramm für die Umsetzung des vorgeschlagenen Konzepts gemäß einer möglichen Ausführungsform.

Die nachfolgenden Ausführungen gehen von dem beschriebenen Konzept aus, wonach insbesondere beim Verzahnungsschleifen in einem zeitlichen Abschnitt der Bearbeitungsphase, in der sich das Werkzeug nicht in Eingriff mit dem Werkstück befindet, an mindestens einer Maschinenachse eine Prüffahrt durchgeführt wird. Im Rahmen dieser wird die Maschinenachse gemäß mindestens eines vorgegebenen Betriebsparameters betätigt und die Reaktion der Maschinenachse auf den Betriebsparameter erfasst. Der erfasste Wert wird von einer Überwachungseinrichtung einer Beurteilung unterzogen. Ein Signal wird von der Überwachungseinrichtung ausgegeben, wenn die Beurteilung ergeben hat, dass der Wert außerhalb eines zulässigen Bereichs liegt. In diesem Falle liegt eine Unregelmäßigkeit in der Maschine vor, was insbesondere auf einen entsprechenden Verschleiß zurückgeführt werden kann. Daher wird dann eine Referenzfahrt durchgeführt, bei der alle Achsen der Maschinen gemäß einem definierten Programm betätigt und diese geprüft werden.

Im Unterschied zur vorbekannten Vorgehensweise werden nunmehr insbesondere sämtliche oder zumindest ein Teil der Leerhübe und Beschleunigungsphasen der Achsen dazu verwendet, um den Maschinenzustand zu bewerten. Dabei können prinzipiell alle Bewegungen während des Bearbeitungsprozesses (insbesondere das Abrichten des Werkzeugs, das Ausrichten des Werkstücks, etc.) herangezogen werden, bei denen Werkstück und Werkzeug nicht im Eingriff sind.

Treten bei den Leerhüben Auffälligkeiten in den Signalen auf, kann entweder automatisch eine Referenzfahrt (zwecks Ermittlung präziser Werte) gestartet oder ein Hinweis auf der Steuerung ausgegeben werden, dass eine Referenzfahrt durchgeführt werden sollte. Des Weiteren ist die Veranlassung eines Stopps der Maschine möglich, um Folgeschäden zu vermeiden.

Somit werden zeitneutral zusätzliche Informationen zum Maschinenzustand ermittelt, so dass die Überwachung quasi lückenlos erfolgt und sehr schnell nach der Feststellung ungewöhnlicher Werte entsprechende Maßnahmen eingeleitet werden können; so kann verhindert werden, dass Werkstücke produziert werden, die Ausschuss sind.

Weiterhin kann ein engmaschiges Konzept für eine vorsorgliche Maschinenwartung ("Predicitve Maintenance") installiert werden.

Dies ist besonders vorteilhaft bei plötzlich auftretendem Verschleiß, so dass zeitnah erkannt werden kann, dass beispielsweise ein Austausch von Maschinenkomponenten erforderlich ist. Gegebenenfalls kann über die Extrapolation der Kenngrößen hier eine Vorhersage für den optimalen Zeitpunkt einer Maßnahme festgelegt werden.

In Phasen der Bearbeitung des Werkstücks, bei denen das Werkzeug nicht ins Werkstück eingreift, insbesondere also beim Abrichten des Werkzeugs, dem Wuchten, dem Schwenken eines Rundtisches oder weiteren Maschinenbewegungen, die für den Bearbeitungszyklus nötig sind, werden Daten der einzelnen Achsen aufgenommen.

Bei diesen Leerhüben (d. h. bei Maschinenbewegungen, bei denen das Werkzeug nicht ins Werkstück eingreift) kann es sich insbesondere handeln um einen Leerhub beim Schlichtabrichten (Y-Achse) oder Schruppabrichten, um die Zustellung beim Abrichten und Schleifen (X-Achse), um einen Leerhub beim Schleifen (Z-Achse) oder um das Anfahren der Grundposition für das Wuchten oder Schleudern. Ferner kommen Beschleunigungs- oder Abbremsphasen der Maschinenachsen in Betracht. Gut geeignet sind auch jene Phasen des Bearbeitungsvorgangs, bei dem ein Wuchten, ein Schleudern, ein Ausrichten des Werkstücks, ein Schwenken eines Turms (eines Rundtisches) für das Abrichten und ein Werkstückwechseln erfolgt.

Bei den aufgenommenen Messsignalen kann es sich insbesondere um Signale eines Beschleunigungsaufnehmers handeln, der auf einer Komponente der Maschine angeordnet ist, um steuerungsinterne Signale (wie beispielsweise Ströme oder Regeldifferenzen) sowie um weitere Signale gegebenenfalls aus bereits vorhandener Sensorik (beispielsweise von einer Strommesszange und einem Geber).

Zur Analyse der Signale können Kennwerte berechnet werden (beispielsweise ein Verschleißindex). Möglich ist es auch, dass die Signalverläufe verwendet und über Neuronale Netze bewertet werden.

Die Verarbeitung der Signale findet bevorzugt auf einem Industrie-PC statt.

Die Signalverläufe, Auswertungen und Analysen können in einer Datenbank lokal auf dem PC gespeichert werden. Weiterhin besteht die Möglichkeit, die Daten cloudbasiert abzulegen und auszuwerten.

Das vorgeschlagene Konzept kann baugruppen-, maschinen- oder bauteilspezifisch oder aber auch maschinenübergreifend eingesetzt werden. Auch ein Ansatz über verschiedene Maschinentypen ist denkbar.

Unabhängig vom Umfang des vorgeschlagenen Konzepts ergeben sich immer wieder Leerhübe für alle bearbeitungsrelevanten Achsen. Diese können sowohl bei der Prozessvorbereitung, beim eigentlichen Schleifprozess, beim Abrichten oder bei der Beendigung des Prozesses vorliegen.

Für die Qualität des Schleifprozesse haben zumeist einzelne Achsen (insbesondere die Y-Achse) besondere Bedeutung. Die Überwachung dieser Achse kann beispielsweise wie folgt aussehen: Beim Abrichtprozess beinhaltet die Standard-Abrichttechnologie einen Leerhub beim Schlichtabrichten (zwei oder mehr Abrichthübe - Pendeln inaktiv) oder einen Leerhub beim Schruppabrichten (ungeradzahlige Anzahl von Abrichthüben). Während des Leerhubs bewegt sich die Achse mit definierter Geschwindigkeit über nahezu den kompletten Verfahrbereich. Gleichermaßen können rotatorische Achsen (beispielsweise beim Schleudervorgang nach dem Abrichten) relevant sein. An all diesen Achsen können dann Prüffahrten im beschriebenen Sinne durchgeführt werden. Äquivalent zum Abrichtvorgang sind natürlich auch andere Leerhübe in anderen Teilen des Bearbeitungsprozesses hilfreich, um diverse Maschinenkomponenten zu überprüfen.

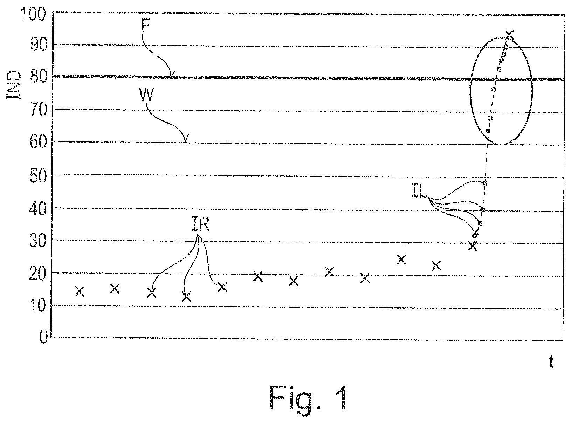

In Figur 1 ist über der Zeit t ein Verschleißindex IND aufgetragen, der im Rahmen von Referenzfahrten zu einem jeweiligen Referenzindex IR führte; der jeweils ermittelte Referenzindex IR ist mit einem Kreuz markiert. Zum Verschleißindex sei angemerkt, dass dies ein Wert ist, der aus verschiedenen Werten bzw. Signalen berechnet werden kann, die für den Verschleiß relevant bzw. typisch sind.

Der zeitliche Abstand zwischen zwei Referenzfahrten beträgt beispielsweise eine Woche. Dabei muss der Verschleißindex unter einer Warngrenze W liegen, um unbedenklich zu sein. Liegt er noch höher als eine Fehlergrenze F, ist damit zu rechnen, dass keine ordnungsgemäßen Werkstücke mehr produziert werden können.

In sehr viel kleineren Zeitabständen wird ein Verschleißindex bei Leerhüben IL aufgenommen, wobei dies exemplarisch nur für die Zeiten zwischen den beiden letzten Referenzindices IR eingetragen ist; der jeweilig ermittelte Verschleißindex bei Leerhüben IL ist mit jeweils einem Punkt markiert. Dabei werden im Vergleich zu den nur in relativ großen Zeitabständen ermittelten Referenzindices IR sehr viele Verschleißindices bei Leerhüben IL ermittelt; letztere werden bevorzugt ständig während des Bearbeitungsprozesses bestimmt.

Zu erkennen ist, dass es zu einem plötzlich ansteigenden Verschleiß zwischen dem vorletzten und letzten eingetragenen Referenzindex IR kommt, da der vorletzte Referenzindex noch deutlich unterhalb der Warngrenze W liegt, der nächste Referenzindex jedoch bereits oberhalb der Fehlergrenze F. Mithin könnte der aufgetretene Verschleiß der hier betroffenen Maschinenachse erst festgestellt werden, wenn bereits eine Anzahl Werkstücke gefertigt und somit Ausschussteile wären. Indes kann durch das vorgeschlagene Verfahren und die sehr viel größere Anzahl von Verschleißindices bei Leerhüben festgestellt werden, dass der Verschleißindex IND relativ stark ansteigt, so dass noch vor Erreichen der Warngrenze W Wartungsmaßnahmen ergriffen werden können.

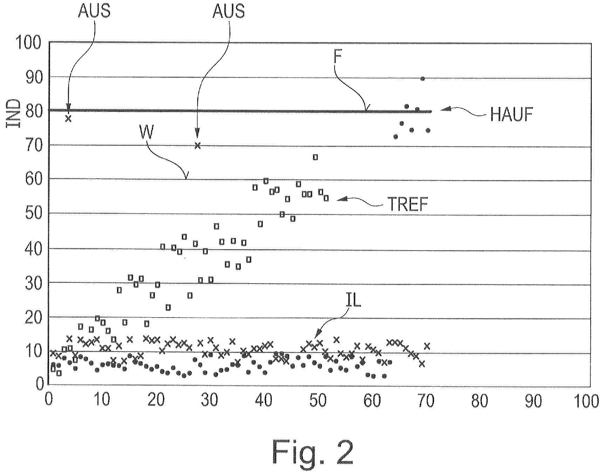

In Figur 2 ist illustriert, dass sich bei der Überwachung eines Verschleißindex IND auch eine statistische bzw. trendmäßige Auswertung empfiehlt. Zu erkennen ist hier, wie sich die Größe des Verschleißindex IND über der Anzahl der Messungen für drei unterschiedliche Maschinenachsen bzw. Reaktionen derselben auf einen vorgegebenen Betriebsparameter darstellen (dargestellt mit Punkten, Kreuzen oder Quadraten). Zu erkennen ist, dass sich die Maschinenachsen bzw. die Reaktionen derselben auf einen vorgegebenen Betriebsparameter für die mit einem Punkt und mit einem Kreuz gekennzeichneten Achsen bei den gefahrenen Leerhüben IL unauffällig verhalten und auf einem niedrigen Niveau des Verschleißindex IND liegen. Indes ist zu sehen, dass der Verschleißindex IND der mit einem Quadrat gekennzeichneten Achse allmählich ansteigt, so dass sich hier ein Trend TREF für eine Referenzfahrt ergibt.

Mit AUS sind Ausreißer markiert, die auftreten können und die im Rahmen der statistischen Analyse unberücksichtigt bleiben.

Indes ist für den Verschleißindex IND der mit Punkten gekennzeichneten Achse ab der 64. Messung zu sehen, dass sich hier eine Häufung HAUF bei einem stark angestiegenen Wert des Verschleißindex ergibt, was darauf hindeutet, dass für diese Maschinenachse ein plötzlicher stark angestiegener Verschleiß vorliegt.

Es wird vorliegend also berücksichtigt, dass ein Algorithmus zum Einsatz kommt, der nur unter gewissen Umständen eine Referenzfahrt veranlasst bzw. darauf hinweist, dass eine solche durchgeführt werden sollte. Die Aussagekraft der Signale der Prüffahrt ist nämlich aufgrund diverser Einflussgrößen deutlich geringer, als die Aussagekraft der Signale in den Referenzfahrten. Insoweit wird nicht immer, wenn bei einer Prüffahrt eine Grenze überschritten ist, eine Referenzfahrt ausgeführt, sondern nur dann, wenn eine gewisse Häufung von Auffälligkeiten festzustellen bzw. ein entsprechender Trend zu erkennen ist. Die hinterlegte Algorithmik zur Auswahl, ob eine Referenzfahrt ausgeführt wird, ist bevorzugt konfigurierbar und/oder selbstlernend.

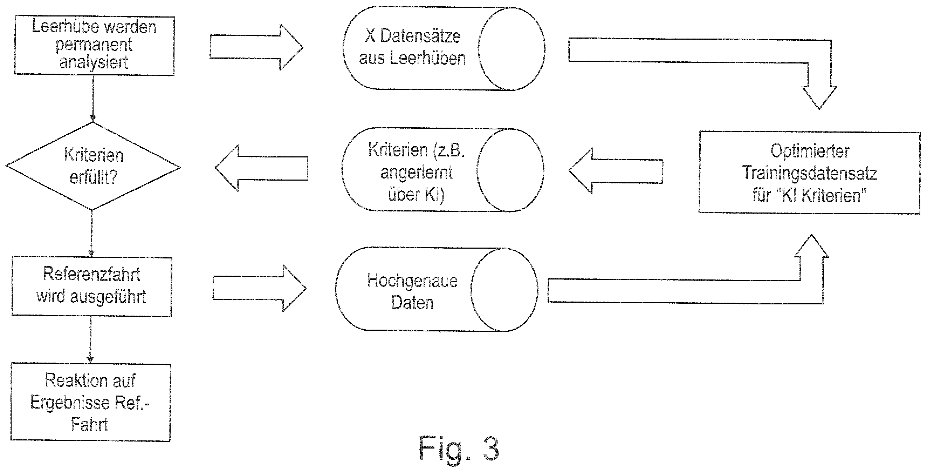

In Figur 3 ist schematisch angegeben, wie die Kriterien für die Durchführung einer Referenzfahrt optimiert werden können. In der erläuterten Weise werden Betriebsparameter während der Leerhübe der Maschinenachsen permanent analysiert und daraufhin geprüft, ob die Werte binnen vorgegebener Grenzen liegen ("Kriterien erfüllt?"). Ist dies nicht der Fall, wird eine Referenzfahrt ausgeführt und hierauf entsprechend reagiert.

Die Datensätze, die aus den Leerhüben gewonnen werden können, gleichermaßen aber auch die präzisen (hochgenauen) Daten aus den Referenzfahrten werden im Rahmen eines Algorithmus einem "Machine Learning" - Konzept unterzogen, bei dem ein optimierter Trainingsdatensatz durch laufendes Labeling erzeugt wird, der wiederum bei der Prüfung der Daten herangezogen werden kann, der bei den durchgeführten Leerhüben gewonnen wird.

Somit ist ein weiterer Aspekt der vorgeschlagenen Vorgehensweise, dass ein selbstlernender Algorithmus zum Einsatz kommt, der nach jeder Referenzfahrt die Korrelationen zwischen der Analyse der Prüffahrt und den Ergebnissen der Referenzfahrt optimiert.

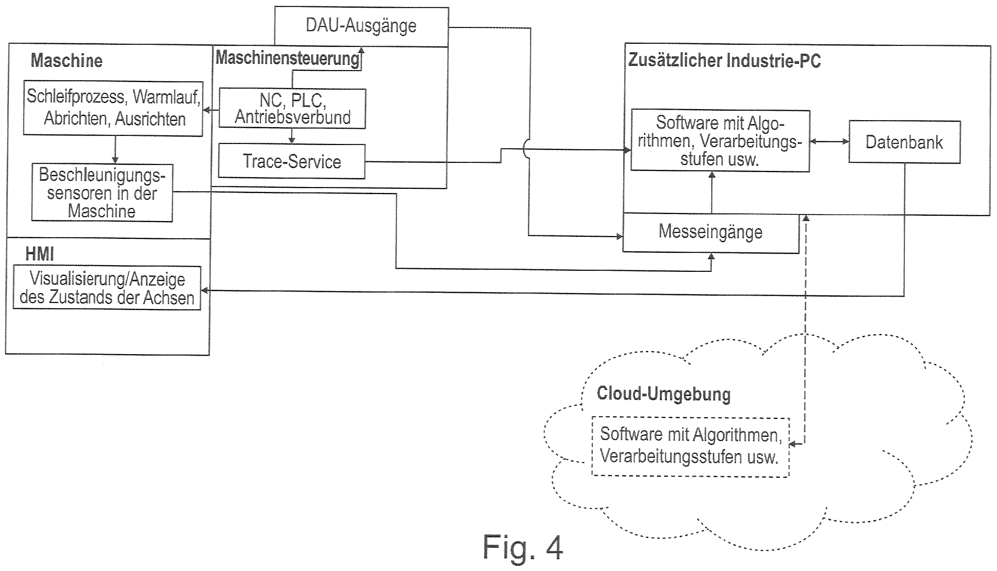

In Figur 4 ist schematisch das Konzept zur Datenverarbeitung bei einer möglichen Umsetzung des vorgeschlagenen Verfahrens illustriert. Im linken Bereich der Figur ist schematisch die Maschine angedeutet, in der der Schleifprozess, der Warmlauf, das Abrichten und das Ausrichten von Werkstücken stattfindet. Bei den jeweiligen Prozessen kann durch Beschleunigungssaufnehmer festgestellt werden, ob die Maschine in ordnungsgemäßem Zustand ist. Eine entsprechende Anzeige kann über ein Human-Machine-Interface (HMI) erfolgen.

Die Maschinensteuerung steuert die Prozesse und es werden Antriebsdaten und/oder Schwingungsdaten über Digital-Analog-Umwandler-Ausgänge (DAU), Traces, Sensoren oder weiteren Daten aus dem Prozess an einen zusätzlichen PC übertragen.

Im PC ist eine Software mit entsprechenden Algorithmen vorhanden, um die empfangenen Daten auszuwerten. Hierfür werden die von den Beschleunigungssensoren und/oder analogen Messausgängen erfassten Werte an Messeingänge übermittelt, welche der Software zur Verfügung gestellt werden. Die Software steht außerdem mit einer Datenbank in Verbindung, wo gespeicherte Prozessdaten hinterlegt sind.

Der PC kann mit einer Cloud in Verbindung stehen.

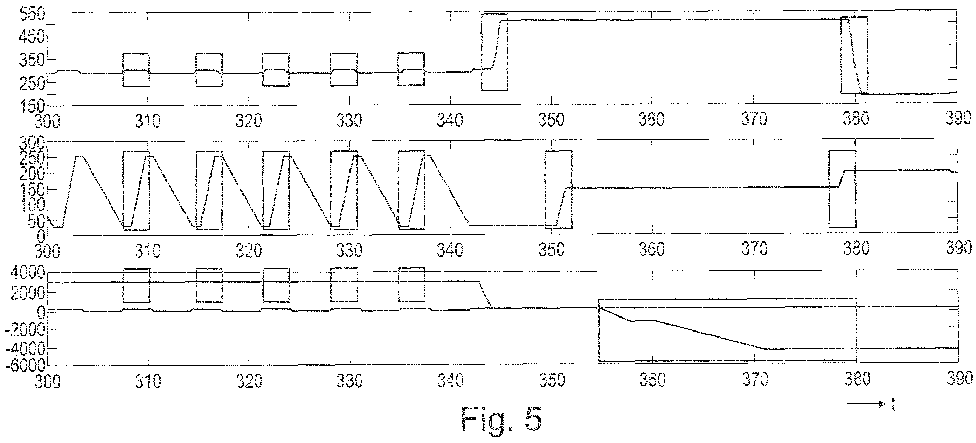

Figur 5 zeigt schematisch die Bewegungen dreier Achsen, wobei deren Verlauf über der Zeit dargestellt ist. Mit Rechtecken sind Bereiche markiert, bei denen aufgrund der Prozessführung kein Eingriff zwischen Werkzeug und Werkstück besteht und es sich somit um Zeitabschnitte handelt, in welchen Prüffahrten vorgenommen werden können.

Die hierbei gemessenen relevanten Signale sind die Stromaufnahme des Antriebs der Achse (hier: der Y-Achse der Maschine), die Regeldifferenz im Regler und die vom Beschleunigungssensor aufgenommene Beschleunigung. Bei diesen Parametern handelt es sich um solche, die typischerweise in der Maschine bei der Messwertaufzeichnung zur Überwachung des Abrichtvorgangs ohnehin vorhanden sind.

Über steuerungsinterne Signale (Zähler Abrichthub, Abrichtstufe, usw.) und der zugeordneten Position der Achse (über einen integrierten Maßstab) kann der Leerhub identifiziert werden; die entsprechenden Signale können "ausgeschnitten" werden (mit Rechtecken markierte Bereiche in Figur 5).

Die Auswertung der Signale erfolgt über die Berechnung statistischer Kennwerte während der Konstantfahrt aber auch über "Machine Learning"-Algorithmen während der Beschleunigungs- und Abbremsphase. Vorteilhaft kann auch für die Auswertung der Konstantfahrt ein "Machine Learning"-Ansatz gewählt werden.

Der berechnete Verschleißwert (s. Verschleißindex IND in Fig. 1 und 2) wird in einer Datenbank abgelegt und mit vorher definierten Grenzwerten und/oder angelernten Grenzen verglichen, um bei Überschreitung eine Referenzfahrt auszulösen.

Die Grenzwerte hierfür (mit automatisch angelernten Grenzen) werden also aus vorherigen Leerhüben und Referenzfahrten bestimmt.

Dabei ist zu berücksichtigen, dass, wie bereits erwähnt, die Signalqualität der Leerhübe bei einer durchgeführten Prüffahrt in der Regel schlechter ist, als diejenige bei einer Referenzfahrt. Daher werden bevorzugt Algorithmen eingesetzt, um insbesondere über statistische Ansätze bzw. durch Nutzung von "Machine Learning"-Konzepten (insbesondere durch Ähnlichkeitsbetrachtungen, welche zur Abänderung der Werte führen können) eine Bewertung vornehmen zu können, ob eine Referenzfahrt nötig ist.

Insoweit ist eine Reduktion auf rein statische Werte bzw. Grenzen nicht erforderlich.

Wird eine Referenzfahrt ausgelöst, können, wie schon erwähnt, die hochgenauen Ergebnisse derselben mit den Ergebnissen der Leerhübe korreliert und so die dynamischen Grenzen optimiert werden.

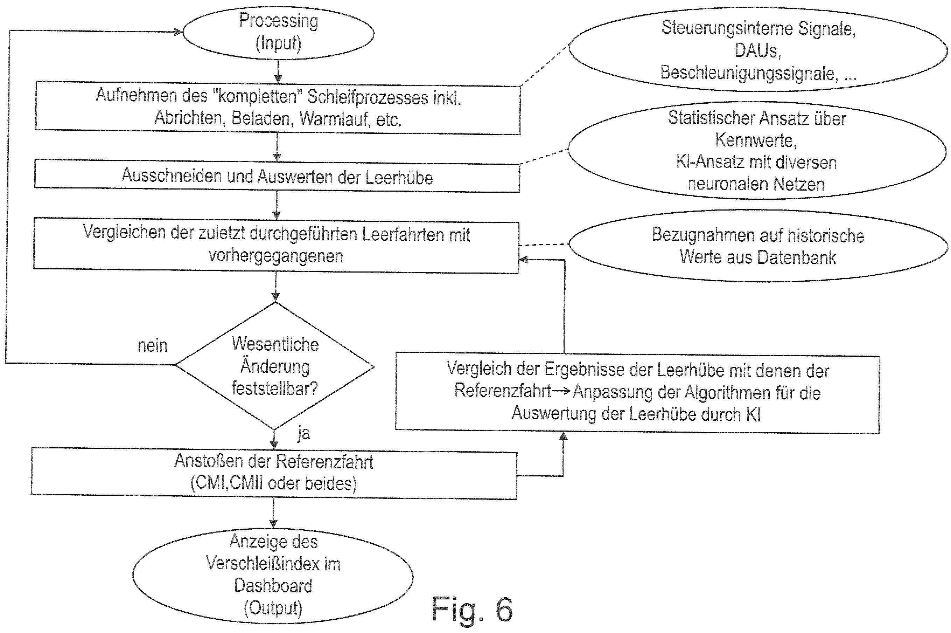

In Figur 6 ist ein Flussdiagramm gezeigt, welches exemplarisch diese Vorgehensweise illustriert.

## Patentansprüche

1. Verfahren zum Hartfeinbearbeiten eines Werkstücks mit einer Verzahnung oder einem Profil auf einer Hartfeinbearbeitungsmaschine, wobei die Hartfeinbearbeitungsmaschine eine Anzahl Maschinenachsen aufweist, welche für die Bearbeitung des Werkstücks NC-gesteuert betätigt werden, wobei bei dem Verfahren das Werkstück auf einer Werkstückspindel aufgenommen und mittels eines Werkzeugs, welches auf einer Werkzeugspindel aufgenommen ist, durch Ineingriffbringen des Werkzeugs mit dem Werkstück bearbeitet wird, wobei die Bearbeitungsphase des Werkstücks mit der Einbringung des Werkstücks in die Hartfeinbearbeitungsmaschine beginnt und mit der Abfuhr des bearbeiteten Werkstücks aus der Hartfeinbearbeitungsmaschine endet,
**dadurch gekennzeichnet,**
**dass** zumindest in einem zeitlichen Abschnitt der Bearbeitungsphase, in der sich das Werkzeug nicht in Eingriff mit dem Werkstück befindet, an mindestens einer Maschinenachse eine Prüffahrt durchgeführt wird,
wobei bei der Prüffahrt die Maschinenachse angetrieben wird, wobei für mindestens einen Antriebsparameter ein Wert vorgegebenen wird, für den ein Soll-Wert der Bewegung der Maschinenachse erwartet wird,
wobei der Ist-Wert der Bewegung der Maschinenachse erfasst wird,
wobei von einer Überwachungseinrichtung ein Vergleich zwischen Soll-Wert und Ist-Wert vorgenommen wird und
wobei von der Überwachungseinrichtung ein Signal ausgegeben wird, wenn
a) der Vergleich zwischen Soll-Wert und Ist-Wert ergeben hat, dass die Differenz zwischen Soll-Wert und Ist-Wert außerhalb eines zulässigen Bereichs liegt oder
b) der Vergleich zwischen Soll-Wert und Ist-Wert ergeben hat, dass die Differenz zwischen Soll-Wert und Ist-Wert einen Wert aufweist, der im Vergleich zu früher erfassten Werten der Differenz auf das Verlassen eines zulässigen Toleranzbandes hindeutet.

2. Verfahren nach Anspruch 1, **dadurch gekennzeichnet, dass** der mindestens eine zeitliche Abschnitt der Bearbeitungsphase innerhalb des Zeitintervalls liegt, in der das Werkstück auf der Werkstückspindel aufgenommen ist.

3. Verfahren nach Anspruch 1 oder 2, **dadurch gekennzeichnet, dass** die Prüffahrt während eines Leerhubs stattfindet, in der das Werkzeug relativ zum Werkstück verfahren wird, ohne dass es zum Eingriff des Werkzeugs in das Werkstück kommt.

4. Verfahren nach Anspruch 1 oder 2, **dadurch gekennzeichnet, dass** die Prüffahrt während eines Beschleunigungs- oder Drehbeschleunigungs-Vorgangs und/oder während eines Bremsvorgangs einer Maschinenachse stattfindet.

5. Verfahren nach einem der Ansprüche 1 bis 4, **dadurch gekennzeichnet, dass** die Prüffahrt während einer Abrichtphase, in der das Werkzeug profiliert wird, und/oder während einer Phase, in der das Werkstück zur Bearbeitung in der Hartfeinbearbeitungsmaschine ausgerichtet wird, und/oder während einer Phase, in der ein Wuchtvorgang durchgeführt wird, und/oder in einer Phase, in der ein Be- oder Entladevorgang durchgeführt wird, erfolgt.

6. Verfahren nach einem der Ansprüche 1 bis 5, **dadurch gekennzeichnet, dass** die Ausgabe des Signals erst erfolgt, wenn eine statistische Auswertung einer Anzahl von erfassten Werten durchgeführt wurde.

7. Verfahren nach einem der Ansprüche 1 bis 6, **dadurch gekennzeichnet, dass** die Beurteilung der erfassten Werte mittels eines Algorithmus erfolgt, der Erfahrungswerte im Rahmen des Machine Learnings berücksichtigt.

8. Verfahren nach einem der Ansprüche 1 bis 7, **dadurch gekennzeichnet, dass** der erfasste Wert die Beschleunigung ist, die ein Beschleunigungsaufnehmer erfasst, und/oder der Strom ist, mit dem eine Maschinenachse angetrieben wird, und/oder eine Regeldifferenz ist, die bei der Regelung der Maschinenachse auftritt, und/oder ein Signal ist, welches einen Rückschluss auf eine Abweichung zwischen Soll-Wert und Ist-Wert liefert.

9. Verfahren nach einem der Ansprüche 1 bis 8, **dadurch gekennzeichnet, dass** die Ausgabe des Signal der Überwachungseinrichtung im Falle dessen, dass die Beurteilung ergeben hat, dass der Wert außerhalb eines zulässigen Bereichs liegt, die Durchführung einer Referenzfahrt der Hartfeinbearbeitungsmaschine veranlasst, bei der die Betätigung aller Maschinenachse erfolgt, ohne dass es zu einem Eingriff des Werkzeug in das Werkstück kommt.

10. Verfahren nach einem der Ansprüche 1 bis 9, **dadurch gekennzeichnet, dass** das Verfahren ein Verzahnungsschleifverfahren ist.
